# EUROPÄISCHE PATENTSCHRIFT

(11) **EP 2 711 065 B1**
(45) Veröffentlichungstag und Bekanntmachung des Hinweises auf die Patenterteilung: **21.03.2018**
(21) Anmeldenummer: 13181940.1
(22) Anmeldetag: 28.08.2013
(51) Int. Cl.: B01D 29/11, B01D 29/13, B01D 29/21

(54) **Hohlzylindrisches Filterelement für einen Flüssigkeitsfilter**
Hollow-cylinder filter element for a fluid filter
Elément filtrant creux cylindrique pour un filtre à liquide

(30) Priorität: 21.09.2012 DE 102012018662
(43) Veröffentlichungstag der Anmeldung: 26.03.2014
(73) Patentinhaber: MANN + HUMMEL GMBH, 71636 Ludwigsburg (DE)
(72) Erfinder: Jokschas, Günter, 71540 Murrhardt (DE)

(56) Entgegenhaltungen:
- EP-A1- 1 254 692
- WO-A2-2007/028426
- DE-A1- 4 430 341
- DE-A1- 19 848 978
- DE-U1- 8 714 656

## Beschreibung

### Technisches Gebiet

Die Erfindung bezieht sich auf ein hohlzylindrisches Filterelement für einen Flüssigkeitsfilter nach dem Oberbegriff des Anspruches 1.

**Stand der Technik**Aus der DE 198 48 978 A1 ist ein Filterelement eines Fluidfilters mit einem Filterkörper bekannt, der wenigstens einen Endkörper besitzt, wobei das Filterelement, wenn es in ein Filtergehäuse des Fluidfilters eingesetzt ist, im Bereich dieses Endkörpers mit Dichtmitteln gegen das Filtergehäuse abgedichtet ist.

In der EP 1 307 274 B1 wird ein Flüssigkeitsfilter für Schmieröl einer Brennkraftmaschine beschrieben, der in einem Filtergehäuse ein hohlzylindrisches Filterelement aufweist, welches radial von außen nach innen von dem zu reinigenden Öl durchströmt wird. In den zylindrischen Innenraum, der die Reinseite darstellt, ist ein Stütz- bzw. Mittelrohr eingesetzt. Das gereinigte Öl wird axial aus dem Innenraum nach unten abgeleitet.

Bei einem Start der Brennkraftmaschine muss das gereinigte Öl für die Schmierung möglichst rasch zur Verfügung stehen.

### Offenbarung der Erfindung

Der Erfindung liegt die Aufgabe zugrunde, ein hohlzylindrisches Filterelement für einen Flüssigkeitsfilter so auszubilden, dass gereinigtes Fluid auch unmittelbar nach der Inbetriebnahme des Filters in ausreichendem Maße zur Verfügung steht.

Diese Aufgabe wird erfindungsgemäß mit den Merkmalen des Anspruches 1 gelöst. Die Unteransprüche geben zweckmäßige Weiterbildungen an.

Das erfindungsgemäße Filterelement wird in Flüssigkeitsfiltern eingesetzt, beispielsweise in Ölfiltern für Brennkraftmaschinen. Grundsätzlich kann das Filterelement aber auch zum Beispiel für Kraftstofffilter eingesetzt werden.

Das hohlzylindrische Filterelement für den Flüssigkeitsfilter wird radial von außen nach innen von dem zu filtrierenden Fluid durchströmt. Das Filterelement weist einen sich in Achslängsrichtung erstreckenden Innenraum auf, der die Reinseite des Filterelementes darstellt und aus dem das gereinigte Fluid axial abgeleitet wird. Im montierten Zustand ist das Filterelement in ein Filtergehäuse des Flüssigkeitsfilters eingesetzt, das Zu- und Abströmanschlüsse für die Zu- und Ableitung des Fluids aufweist.

In den Innenraum des Filterelementes ist ein Verschlussrohr eingesetzt, dessen Außendurchmesser kleiner ist als der Durchmesser des Innenraums, wodurch ein Pufferringraum zwischen der Innenseite des Innenraums und der Außenseite des Verschlussrohrs gebildet ist. Das Verschlussrohr weist eine strömungsdichte Wandung auf, so dass Flüssigkeit, welche sich in dem Pufferringraum befindet, nicht über die strömungsdichte Wandung des Verschlussrohres abströmen kann. Eine Abströmung ist vielmehr nur möglich, wenn das gereinigte Fluid, welches sich im Pufferringraum ansammelt, axial eine Abströmöffnung des Verschlussrohrs erreicht, bei der es sich zweckmäßigerweise um die stirnseitige Öffnung des Verschlussrohrs handelt. Das Verschlussrohr besitzt vorteilhafterweise eine kleinere axiale Länge als das Filterelement bzw. der Innenraum im Filterelement. Mit dem radialen Durchströmen des Filterelementes sammelt sich an der Reinseite das Fluid zunächst im Pufferringraum an, wobei der Pegel im Pufferringraum bis zum Erreichen der Abströmöffnung im Verschlussrohr axial ansteigt. Sobald der Pegel des gereinigten Fluids im Pufferringraum die Abströmöffnung erreicht hat, kann das Fluid über das Verschlussrohr axial abströmen.

Diese Ausführung hat den Vorteil, dass nach dem Beenden eines Filtrationsvorgangs das gereinigte Fluid im Pufferringraum verbleibt und bei einer erneuten Inbetriebnahme nach kurzer Zeit wieder gereinigtes Fluid zur Weiterverwendung zur Verfügung steht.

Erfindungsgemäß ist in den Innenraum des Filterelementes ein Mittelrohr eingesetzt, welches einen größeren Durchmesser als das Verschlussrohr aufweist und dieses umgreift. Der Pufferringraum befindet sich zwischen der Innenseite des Mittelrohrs und der Außenseite des Verschlussrohrs. Um ein Rückströmen gereinigten Fluids aus dem Pufferringraum radial nach außen zu vermeiden, weist das Mittelrohr über eine axiale Teillänge eine strömungsdichte Wandung auf, so dass der Pufferringraum sowohl radial nach außen über das Mittelrohr als auch radial nach innen über das Verschlussrohr strömungsdicht abgeschlossen ist und ein Abströmen lediglich möglich ist, wenn der Pegel gereinigten Fluids im Pufferringraum die Abströmöffnung im Verschlussrohr erreicht. Das Mittelrohr und das Verschlussrohr können zumindest annähernd über die gleiche axiale Länge strömungsdichte Wandungen aufweisen, wobei gegebenenfalls die strömungsdichte Wandung des Mittelrohrs diejenige des Verschlussrohrs überragt. Das Verschlussrohr und das Mittelrohr können sich, gemäß einer weiteren zweckmäßigen Ausführung, zumindest über die halbe axiale Länge des Filterelementes erstrecken.

Das Verschlussrohr ist mit dem Filterelement verbunden, insbesondere über das Mittelrohr, wobei Verschlussrohr und Mittelrohr zweckmäßigerweise zwei verschiedene Bauteile bilden, die in geeigneter Weise miteinander verbunden sind, beispielsweise mittels einer Verrastung. Um den Pufferringraum strömungsdicht abzudichten, ist das Verschlussrohr vorteilhafterweise gegenüber einer stirnseitigen, ringförmigen Endscheibe an dem Filterelement abgedichtet. Die Endscheibe weist beispielsweise einen Kragen auf, welcher eine zentrale Ausnehmung begrenzt und sich in Achsrichtung erstreckt, wobei zwischen dem Kragen und der in den Kragen einragenden Mantelfläche des Verschlussrohrs ein Dichtring angeordnet ist. Dieser Dichtring ist, gemäß einer weiteren vorteilhaften Ausführung, in eine Aufnahmenut in der Mantelfläche des Verschlussrohrs eingesetzt, wodurch ein sicherer, unverrückbarer Sitz des Dichtringes gegeben ist. Möglich ist auch eine Anordnung des Dichtrings in einer entsprechenden Aufnahmenut an der Innenwand des Kragens, welcher einteilig mit der Endscheibe ausgebildet ist.

### Kurze Beschreibung der Zeichnungen

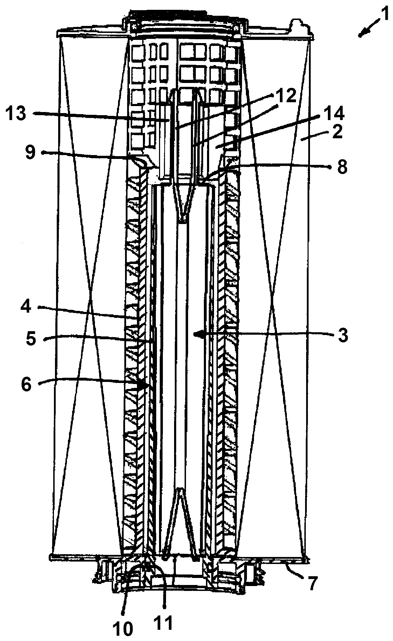

Weitere Vorteile und zweckmäßige Ausführungen sind den weiteren Ansprüchen, der Figurenbeschreibung und der Zeichnung zu entnehmen, in der ein hohlzylindrisches Filterelement für einen Flüssigkeitsfilter im Längsschnitt dargestellt ist.

### Ausführungsform(en) der Erfindung

Das in der Figur dargestellte Filterelement 1 ist ringförmig bzw. hohlzylindrisch ausgebildet und wird zur Flüssigkeitsfiltration, beispielsweise als Ölfilter für eine Brennkraftmaschine eingesetzt. Das aufrecht stehende Filterelement 1, dessen Längsachse zumindest annähernd mit dem Gewichtskraftvektor zusammenfällt, weist ein Filtermedium 2 auf, welches radial von außen nach innen von dem zu reinigenden Fluid durchströmt wird. Das Filtermedium 2 umschließt einen zentralen, zylindrischen Innenraum 3, der sich in Längsrichtung durch das Filterelement 1 erstreckt und die Reinseite darstellt. Über den Innenraum 3 wird das gereinigte Fluid axial aus dem Filterelement 1 abgeleitet.

In das Filterelement 1 ist ein Stütz- bzw. Mittelrohr 4 eingesetzt, welches den Innenraum 3 auskleidet. Das Mittelrohr 4 umgreift ein als separates Bauteil ausgeführtes Verschlussrohr 5, dessen Außendurchmesser kleiner ist als der Innendurchmesser des Mittelrohrs 4, so dass ein zwischenliegender Pufferringraum 6 zur Aufnahme des gereinigten Fluids gebildet ist.

Das Verschlussrohr 5 ist als separates Bauteil ausgeführt, das mit dem Mittelrohr 4 verbunden ist. Die Verbindung erfolgt mittels Rastelementen 12, die als einteilig mit dem Verschlussrohr 5 ausgebildete Raststege ausgeführt sind, welche die obere Stirnkante 8 des Verschlussrohrs axial überragen. Im Bereich der freien Stirnseite der Rastelemente 12 sind Rasthaken angeformt, die verrastend durch einen Hohlzylinder 13 des Mittelrohrs 4 ragen, so dass in Achsrichtung und in Umfangsrichtung das Verschlussrohr 5 am Mittelrohr 4 verrastet ist. Der Hohlzylinder 13 ist über radiale Rippen 14 mit der gitterförmigen Wandung des Mittelrohrs 4 verbunden. Zur Montage des Verschlussrohres 5 an dem Mittelrohr 4 werden die Rasthaken durch den Hohlzylinder 13 durchgeführt, bis sie auf der gegenüberliegenden Stirnseite des Hohlzylinders 13 wieder austreten und dort verrasten.

Das Verschlussrohr 5 weist eine kürzere axiale Länge als das Filterelement 1 auf und erstreckt sich von einer unteren, stirnseitigen Endscheibe 7 am Filterelement bis etwa drei Viertel der axialen Höhe. Die obere Stirnkante 8 des Verschlussrohrs 5, welches eine strömungsdichte Wandung aufweist, bildet die Abströmöffnung, über die das gereinigte Fluid aus dem Innenraum 3 axial nach unten abströmen kann.

Auch das Mittelrohr 4 weist über eine axiale Teillänge eine strömungsdichte Wandung auf, welche sich von der unteren Endscheibe 7 bis geringfügig oberhalb der Stirnkante 8 des Verschlussrohres 5 erstreckt; über die restliche axiale Länge ist das Mittelrohr 4 dagegen als ein Gitter mit Strömungszwischenräumen ausgebildet, über die das zu reinigende Fluid radial in den Innenraum 3 einströmen kann. Die obere Stirnkante 9 der strömungsdichten Wandung des Mittelrohrs 4 liegt geringfügig oberhalb der Stirnkante 8 des Verschlussrohrs 5.

Zwischen der radial außen liegenden, strömungsdichten Wandung des Mittelrohrs 4 und der radial innen liegenden, strömungsdichten Wandung des Verschlussrohrs 5 liegt der Pufferringraum 6, in den das gereinigte Fluid während des Filtrationsvorgangs einströmt. Sobald der Pegel des Fluids im Pufferringraum 6 bis zur Stirnkante 8 des Verschlussrohrs 5 angestiegen ist, kann das gereinigte Fluid über die Stirnkante 8 in das Innere des Verschlussrohrs 5 einströmen und axial über das Verschlussrohr 5 nach unten abgeleitet werden.

Um den Pufferringraum 6 strömungsdicht nach unten zu verschließen, ist zwischen dem Außenmantel des Verschlussrohrs 5 und einem Kragen 10, welcher einteilig mit der unteren Endscheibe 7 ausgebildet ist, ein Dichtring 11 angeordnet. Der Kragen 10 ist zylindrisch ausgebildet und umgreift die zentrale Abströmöffnung in der Endscheibe 7, durch die das Verschlussrohr 5 hindurchragt. Das Verschlussrohr 5 überragt die Endscheibe 7, der Dichtring 11 befindet sich in einer Aufnahmenut, die in die Mantelfläche des Verschlussrohrs 5 im Bereich des die Endscheibe 7 überragenden Abschnittes eingebracht ist.

## Patentansprüche

1. Hohlzylindrisches Filterelement für einen Flüssigkeitsfilter, insbesondere für einen Ölfilter für eine Brennkraftmaschine, das radial von außen nach innen von einem zu filtrierenden Fluid durchströmbar ist, wobei das gereinigte Fluid über den Innenraum (3) des Filterelements (1) axial ableitbar ist, wobei in den Innenraum (3) ein Verschlussrohr (5) kleineren Durchmessers mit strömungsdichter Wandung einragt, das mit dem Filterelement (1) verbunden ist, wobei das gereinigte Fluid über das Verschlussrohr (5) axial ableitbar ist, **dadurch gekennzeichnet, dass** in den Innenraum (3) des Filterelements (1) ein Mittelrohr (4) eingesetzt ist, das das Verschlussrohr (5) umgreift, wobei zwischen der Innenseite des Mittelrohrs (4) und der Außenseite des Verschlussrohrs (5) ein Pufferringraum (6) für gereinigtes Fluid gebildet ist, wobei das Mittelrohr (4) über eine axiale Teillänge eine strömungsdichte Wandung aufweist, wobei mit dem radialen Durchströmen des Filterelementes an der Reinseite des Filterelementes die Flüssigkeit im Pufferringraum ansammelbar ist, wobei der Pegel im Pufferringraum bis zum Erreichen der Abströmöffnung im Verschlussrohr axial ansteigbar ist.

2. Filterelement nach Anspruch 1, **dadurch gekennzeichnet, dass** das Verschlussrohr (5) mit dem Mittelrohr (4) verbunden, insbesondere verrastet ist.

3. Filterelement nach Anspruch 1 oder 2, **dadurch gekennzeichnet, dass** die strömungsdichte Wandungen des Verschlussrohrs (5) und des Mittelrohrs (4) zumindest annähernd die gleiche axiale Länge aufweisen.

4. Filterelement nach einem der Ansprüche 1 bis 3, **dadurch gekennzeichnet, dass** die strömungsdichten Wandungen des Verschlussrohrs (5) und des Mittelrohrs (4) sich zumindest über die halbe axiale Länge des Filterelements (1) erstrecken.

5. Filterelement nach einem der Ansprüche 1 bis 4, **dadurch gekennzeichnet, dass** an einer Stirnseite des Filterelements (1) eine ringförmige Endscheibe (7) angeordnet und das Verschlussrohr (5) gegenüber der Endscheibe (7) abgedichtet ist.

6. Filterelement nach Anspruch 5, **dadurch gekennzeichnet, dass** ein Dichtring (11) zwischen der Mantelfläche des Verschlussrohrs (5) und einem eine zentrale Ausnehmung begrenzenden Kragen (10) der Endscheibe (7) angeordnet ist.

7. Filterelement nach Anspruch 6, **dadurch gekennzeichnet, dass** der Dichtring (11) in eine Aufnahmenut eingesetzt ist, die in die Mantelfläche des Verschlussrohrs (5) eingebracht ist.

8. Flüssigkeitsfilter, insbesondere Ölfilter für eine Brennkraftmaschine, mit einem hohlzylindrischen Filterelement (1) nach einem der Ansprüche 1 bis 7.

## Claims

1. Hollow-cylindrical filter element for a liquid filter, in particular for an oil filter for an internal combustion engine which can be radially flowed through from outside to inside by a fluid to be filtered, wherein the purified fluid can be axially drained off via the interior space (3) of the filter element (1), wherein a shut-off pipe (5) of smaller diameter with flow-tight wall, which is connected to the filter element (1), protrudes into the interior space (3), wherein the purified fluid can be axially drained off via the shut-off pipe (5), **characterized in that** a central tube (4), which encloses the shut-off pipe (5), is inserted in the interior space (3) of the filter element (1), wherein an annular buffer space (6) for purified fluid is formed between the interior side of the central tube (4) and the outside of the shut-off pipe (5), wherein the central tube (4) features a flow-tight wall across an axial partial length, wherein the liquid can be collected in the annular buffer space when it flows radially through the filter element on the clean side of the filter element, wherein the level in the annular buffer space can axially rise up to reaching the outflow opening in the shut-off pipe.

2. Filter element according to claim 1, **characterized in that** the shut-off pipe (5) is connected, in particular engaged with the central tube (4).

3. Filter element according to claim 1 or 2, **characterized in that** the flow-tight walls of the shut-off pipe (5) and of the central tube (4) feature at least approximately the same axial length.

4. Filter element according to one of the claims 1 to 3, **characterized in that** the flow-tight walls of the shut-off pipe (5) and of the central tube (4) extend at least across the half axial length of the filter element (1).

5. Filter element according to one of the claims 1 to 4, **characterized in that** on a front side of the filter element (1) an annular end disk (7) is disposed and that the shut-off pipe (5) is sealed with regard to the end disk (7).

6. Filter element according to claim 5, **characterized in that** a sealing ring (11) is disposed between the circumferential surface of the shut-off pipe (5) and a collar (10) of the end disk (7) limiting a central recess.

7. Filter element according to claim 6, **characterized in that** the sealing ring (11) is inserted into a receiving groove which is incorporated in the circumferential surface of the shut-off pipe (5).

8. Liquid filter, in particular oil filter for an internal combustion engine, with a hollow-cylindrical filter element (1) according to one of the claims 1 to 7.

## Revendications

1. Élément filtrant en forme de cylindre creux pour un filtre à liquide, notamment pour un filtre à huile pour un moteur à combustion interne, cet élément pouvant être parcouru en sens radial, de l'extérieur vers l'intérieur, par un fluide à filtrer, le fluide purifié pouvant être évacué en sens axial par l'intermédiaire de l'espace intérieur (3) de l'élément filtrant (1), un tube obturateur (5) d'un diamètre inférieur, doté d'une paroi étanche au flux et relié à l'élément filtrant (1), entrant dans l'espace intérieur (3), le fluide purifié pouvant être évacué en sens axial par l'intermédiaire du tube obturateur (5), **caractérisé en ce qu'**un tube central (4) enrobant le tube obturateur (5) est inséré dans l'espace intérieur (3) de l'élément filtrant (1), un espace tampon annulaire (6) pour le fluide purifié étant formé entre la face intérieure du tube central (4) et la face extérieure du tube obturateur (5), le tube central (4) comportant sur une longueur partielle axiale une paroi étanche au fluide, le liquide pouvant être collecté dans l'espace tampon annulaire lorsqu'il traverse l'élément filtrant en sens radial du côté pur de l'élément filtrant, le niveau au sein de l'espace tampon annulaire pouvant monter en sens axial jusqu'à ce qu'il atteigne l'orifice d'évacuation située dans le tube obturateur.

2. Élément filtrant selon la revendication 1, **caractérisé en ce que** le tube obturateur (5) est relié au tube central (4), et en particulier encliqueté avec ce tube.

3. Élément filtrant selon la revendication 1 ou 2, **caractérisé en ce que** les parois étanches au fluide du tube obturateur (5) et du tube central (4) présentent au moins approximativement la même longueur axiale.

4. Élément filtrant selon l'une des revendications 1 à 3, **caractérisé en ce que** les parois étanches au fluide du tube obturateur (5) et du tube central (4) s'étendent au moins sur la moitié de la longueur axiale de l'élément filtrant (1).

5. Élément filtrant selon l'une des revendications 1 à 4, **caractérisé en ce qu'**un disque d'extrémité (7) annulaire est disposé sur une face frontale de l'élément filtrant (1) et que le tube obturateur (5) est étanché vis-à-vis du disque d'extrémité (7).

6. Élément filtrant selon la revendication 5, **caractérisé en ce qu'**une bague d'étanchéité (11) est disposée entre la surface externe du tube obturateur (5) et un collet (10) du disque d'extrémité (7) limitant un évidement central.

7. Élément filtrant selon la revendication 6, **caractérisé en ce que** la bague d'étanchéité (11) est montée dans une rainure de réception qui est intégrée dans la surface externe du tube obturateur (5).

8. Filtre à liquide, en particulier filtre à huile pour un moteur à combustion interne, avec un élément filtrant (1) en forme de cylindre creux selon l'une des revendications 1 à 7.
